# EUROPEAN PATENT SPECIFICATION

(11) **EP 2 731 977 B1**
(45) Date of publication and mention of the grant of the patent: **23.08.2017**
(21) Application number: 12733162.7
(22) Date of filing: 10.07.2012
(51) Int. Cl.: C08G 18/08, C08G 18/32, C08G 18/66, C08G 18/75, C09D 175/04, C08G 83/00

(54) **AQUEOUS RESIN COMPOSITION COMPRISING A POLYESTER-POLYURETHANE RESIN INCLUDING A DENDRITIC POLYOL**
AQUEOUS RESIN COMPOSITION COMPRISING A POLYESTER-POLYURETHANE RESIN INCLUDING A DENDRITIC POLYOL
COMPOSITION DE RÉSINE AQUEUSE COMPRENANT UNE RÉSINE POLYESTER-POLYURÉTHANE INCLUANT UN POLYOL DENDRITIQUE.

(30) Priority: 15.07.2011 EP 11174093
(43) Date of publication of application: 21.05.2014
(73) Proprietor: Covestro Deutschland AG, 51373 Leverkusen (DE)
(72) Inventor: SCHRINNER, Marc Claudius, D-90409 Nürnberg (DE); GEWISS, Heinz-Dietmar, 40668 Meerbusch (DE)
(74) Representative: Levpat
(86) International application number: PCT/EP2012/063495
(87) International publication number: WO 2013/010856

(56) References cited:
- EP-A1- 1 418 192
- WO-A1-2009/109622
- US-A- 5 418 301

## Description

The present invention relates to an aqueous resin composition comprising a polyester-polyurethane resin with a dendritic polyol as part of the reaction mixture. The invention further relates to a process for preparing the aqueous resin composition according to the invention, an aqueous coating system comprising the aqueous resin composition according to the invention and the use of the aqueous coating system according to the invention for coating, varnishing and/or sealing a substrate.

Aqueous binders based on polyurethane dispersions are well-known and are described for example in Houben-Weyl, Methoden der organischen Chemie, 4. ed. volume E 20, p. 1659 (1987), J. W. Rosthauser, K. Nachtkamp in "Advances in Urethane Science and Technology", K. C. Frisch and D. Klempner, Editors, Vol. 10, pp. 121-162 (1987) or D. Dietrich, K. Uhlig in Ullmann's Encyclopedia of Industrial Chemistry, Vol. A 21, p. 677 (1992).

When used as coatings such binders may be used to enhance the outer appearance of the substrate or to protect the underlying substrate from adverse environmental conditions. Examples of prior publications include:
EP 0 669 352 A1 which describes special aqueous polyester-polyurethane dispersions which, in combination with cross-linker resins and, where appropriate, with linear, hydroxyl-free polyurethane dispersions, can be cured to give coatings having a good soft-feel effect, good mechanical properties, and a generally satisfactory solvent resistance. For certain applications, however, the resistance, particularly the resistance to suntan lotion, are still in need of improvement.

EP 0 926 172 A2 describes aqueous two-component (2K) polyurethane coating materials in which the resistance to suntan lotion (which penetrates the film, causing delamination and/or other damage) can be improved by using special ester-modified polyisocyanates. The binders used in that case are mixtures of carboxylate- and/or sulfonate-hydrophilicized polyester polyol dispersions with physically drying, carboxylate- and/or sulfonate-hydrophilicized polyurethane dispersions.

EP 0 578 940 A1 describes water dispersible polyurethane polyols on the basis of polyester and polycarbonate polyols or segmented polyestercarbonate polyols containing 25 to 100% of acid groups neutralized with bases, corresponding to an acid number of 6 to 45 mg KOH/g, with a hydroxyl number of 20 to 250 mg KOH/g, a molecular weight M_{w} of 2000 to 150000, a urethane group content of 2 to 16 weight-% and a carbonate group content of 1 to 25 weight-%. Also described are a method for the production of water-dilutable binder combinations from 30 to 90 weight-% of such polyols and 2 to 70 weight-% of a cross-linker resin and the use of such polyols as binder component in coatings or sealing materials.

EP 1 418 192 A1 is concerned with water-dilutable polyurethane resins with a carbonate group content of 5,8 to 20,0 weight-% and which is present in a solvent, the solvent being inert towards isocyanate groups.

With respect to coatings having good weather stability US 2010/0222448 A1 discloses an aqueous polyurethane dispersion obtained by dispersing in water a reaction product obtained by reacting a reaction mixture comprising at least one organic, aliphatic, cycloaliphatic or aromatic di-, tri- or polyisocyanate, at least one isocyanate reactive polycarbonate diol, triol or polyol, at least one compound comprising at least one isocyanate reactive group and at least one free radically polymerizable unsaturated group, and at least one compound comprising at least one isocyanate reactive group and at least one at least dispersing active group, and optionally at least one compound com-prising at least two isocyanate reactive groups and having a molecular weight of less than 1000 g/mole. While not elucidated by experiments, the general possibility that dendritic polyester and/or polyether polyols may be used for the production of the polycarbonate diols, triols and polyols is mentioned in this patent application.

An example for a film-forming polymer dispersion comprising a dendritic polymer is given in US 6,284,233 which relates to an antiwrinkle composition that includes, in a physiologically acceptable medium: a dispersion of a film-forming polymeric system containing at least one polymer capable of forming a film permeable to water vapor, having a Young's modulus ranging from 10⁸ to 10¹⁰ N/m² and producing, after application at a concentration of 7% in water and then drying, a retraction of the isolated stratum corneum greater than 1% at a temperature of 30 °C and a relative humidity of 40%, and a dendritic polyester polymer having terminal hydroxyl functional groups.

There is a constant need in the art for improved coatings which are not degraded by exterior conditions. This is especially the case in coatings for objects in marine environments that are constantly exposed to moisture, direct and reflected sunlight and salt.

The present invention therefore has the object of providing compositions for coatings which protect objects in the above-mentioned environment over a longer period of time.

According to the invention this object is achieved by an aqueous resin composition comprising a polyester-polyurethane resin obtained by reacting, in a one-stage process or multi-stage process, a reaction mixture comprising
(A1) a polyester polyol with a number-average molecular weight Mₙ of ≥ 400 g/mole to ≤ 20 000 g/mole,
(A2) at least one compound containing at least two isocyanate-reactive groups and at least one group capable of forming anions,
(A3) a polyisocyanate, and
(B) a dendritic polyol obtainable from a central initiator molecule or initiator polymer having at least one reactive hydroxyl group (X), which hydroxyl group (X) under formation of an initial tree structure is bonded to a reactive carboxyl group (Y) in a monomeric chain extender having the two reactive groups (X) and (Y), and wherein the chain extender has at least one carboxyl group (Y) and at least two hydroxyl groups (X) or hydroxyalkyl substituted hydroxyl groups (X).

In combination with a binder the aqueous resin compositions according to the invention result in 1K or 2K coatings which display an excellent resistance to environmental conditions that are encountered in marine environments.

Polyester polyols which can be used as component (A1) have a molecular weight Mₙ (may be determined according to DIN 55672/1 or DIN 55672/2) of ≥ 400 g/mole to ≤ 20 000 g/mole, preferably ≥ 600 g/mole to ≤ 10 000 g/mole, more preferably ≥ 600 g/mole to ≤ 6000 g/mole. Their hydroxyl number (DIN 53240 part 2) may generally be from 22 to 400, preferably from 50 to 200 mg KOH/g. The OH functionality may be in the range from 1.5 to 6, preferably 1.8 to 3, and more preferred from 1.9 to 2.5.

Highly suitable compounds are the conventional polycondensates of diols and also, where appropriate, polyols (triols, tetraols) and dicarboxylic and also, where appropriate, polycarboxylic (tricarboxylic, tetracarboxylic) acids or hydroxycarboxylic acids or lactones. Instead of the free polycarboxylic acids it is also possible to use the corresponding polycarboxylic anhydrides or corresponding polycarboxylic esters of lower alcohols to prepare the polyesters. Examples of suitable diols are ethylene glycol, butylene glycol, diethylene glycol, triethylene glycol, polyalkylene glycols such as polyethylene glycol, and also propanediol or butane-1,4-diol, preference being given to hexane-1,6-diol, neopentylglycol or neopentylglycol hydroxypivalate. If desired it is also possible to use polyols such as trimethylolpropane, glycerol, erythritol, pentaerythritol, trimethylolbenzene or trishydroxyethyl isocyanurate, for example, as well.

Examples of suitable dicarboxylic acids are phthalic acid, isophthalic acid, terephthalic acid, tetrahydrophthalic acid, hexahydrophthalic acid, cyclohexane dicarboxylic acid, adipic acid, azeleic acid, sebacic acid, glutaric acid, tetrachlorophthalic acid, maleic acid, fumaric acid, itaconic acid, malonic acid, suberic acid, 2-methyl succinic acid, 3,3-diethylglutaric acid, 2,2-dimethyl succinic acid. The possible anhydrides of these acids are likewise suitable. In the content of the present invention the anhydrides are always embraced by "acid".

It is also possible to use monocarboxylic acids, such as benzoic acid and hexanecarboxylic acid, provided that the average functionality of the polyol is greater than 2. Saturated aliphatic or aromatic acids are preferred, such as adipic acid or isophthalic acid. If desired it is also possible to use relatively small amounts of polycarboxylic acid as well, such as trimellitic acid.

Hydroxycarboxylic acids which can be used as reaction participants in the preparation of a polyester polyol having terminal hydroxyl groups are for example hydroxycaproic acid, hydroxybutyric acid, hydroxydecanoic acid, hydroxystearic acid and the like. Suitable lactones are, for example, caprolactone or butyrolactone.

Compounds of component (A1) may also include, at least proportionally, primary or secondary amino groups as isocyanate-reactive groups.

Ionic or potentially ionic compounds suitable as component (A2) include for example mono- and dihydroxycarboxylic acids, mono- and diaminocarboxylic acids, mono- and dihydroxysulfonic acids, mono- and diaminosulfonic acids and salts thereof such as dihydroxycarboxylic acids, hydroxypivalic acid, N-(2-aminoethyl)-β-alanine, 2-(2-aminoethylamino)ethanesulfonic acid, ethylene-diamine-propyl- or butylsulfonic acid, 1,2- or 1,3-propylenediamine-β-ethylsulfonic acid, lysine, 3,5-diaminobenzoic acid, the hydrophilicizing agent according to Example 1 from EP 0 916 647 A2 and its alkali metal salts and/or ammonium salts; the adduct of sodium bisulfite with but-2-ene-1,4-diol polyethersulfonate or the propoxylated adduct of 2-butenediol and NaHSO₃ (e.g. in DE 2 446 440 A1, page 5-9, formula I-III). Preferred ionic or potential ionic compounds (A2) are those which possess carboxyl and/or carboxylate groups. Particularly preferred ionic compounds (A2) are dihydroxycarboxylic acids, especially α,α-dimethylolalkanoic acids, such as 2,2-dimethylolacetic acid, 2,2-dimethylolpropionic acid, 2,2-dimethylolbutyric acid, 2,2-dimethylolpentanoic acid or dihydroxysuccinic acid.

It is preferred that the amount of the component (A2) is rather high, for example in the range of ≥ 2 weight-% to ≤ 10 weight-%, based on the total weight of components (A1), (A2), (A3) and (B). Particularly preferred is an amount of ≥ 3 weight-% to ≤ 5 weight-%. For example, 2,2-dimethylolpropionic acid as sole component (A2) may be present in ≥ 2 weight-% to ≤ 10 weight-%, based on the total weight of components (A1), (A2), (A3) and (B). Particularly preferred in amount of ≥ 3 weight-% to ≤ 5 weight-%.

The acid groups incorporated in the resin by component (A2) can at least proportionally be neutralized. An example of such is dimethylethanolamine, which serves preferably as the neutralizing agent.

In the context of the present invention, dendritic polymers in general are a class of polymers in the form of highly branched globular macromolecules. Dendritic polymers have traditionally been classified into 2 categories: dendrimers and hyperbranched polymers. A dendrimer is characterised by a perfect symmetrical globular shape which results from a step-wise controlled process giving a monodisperse molecular weight distribution. The second category, the hyperbranched polymer is attractive because they resemble dendrimers (their difference lies in their polydispersity and the less perfect globular shape) but they can be produced more easily on a larger scale.

Suitable dendritic polyols (B) are described in US 5,418,301.

Polyisocyanates (A3) that may be used include aromatic and aliphatic polyisocyanates, the aliphatic polyisocyanates being preferred.

By way of example, the polyester-polyurethane resin may be obtained by reacting, in a one-stage process or multi-stage process, a reaction mixture comprising:
≥ 40 weight-% to ≤ 60 weight-% of (A1),
≥ 2 weight-% to ≤ 10 weight-% of (A2),
≥ 10 weight-% to ≤ 20 weight-% (A3), and
≥ 25 weight-% to ≤ 40 weight-% (B), the total weight percentages of (A1), (A2), (A3) and (B) adding up to ≤ 100 weight-%.

Preferred embodiments and other aspects of the present invention are described below. They may be combined freely unless the context clearly indicates otherwise.

In one embodiment of the aqueous resin composition according to the invention, in the dendritic polyol (B) the tree structure is extended and further branched from the initiator molecule or initiator polymer through an addition of further molecules of a monomeric chain extender by means of bonding with the reactive groups (X) and (Y) thereof and/or is further extended through reaction with a chain stopper.

In another embodiment of the aqueous resin composition according to the invention, in the dendritic polyol (B) the central initiator molecule or initiator polymer is selected from the group consisting of an aliphatic diol, a cycloaliphatic diol, an aromatic diol, a triol, a tetrol, a sugar alcohol, anhydroennea-heptitol, dipentaerythritol, an alpha-alkylglucoside, a monofunctional alcohol, and an alkoxylate polymer having a molecular weight of at most 8000 g/mol and being produced by reaction between an alkylene oxide and one or more hydroxyl groups originating from one of the aforementioned compounds.

Preferably, in the dendritic polyol (B) the central initiator molecule is selected from the group consisting of ditrimethylolpropane, ditrimethylolethane, dipentaerythritol, pentaerythritol, alkoxylated pentaerythritol, trimethylolethane, trimethylolpropane, alkoxylated trimethylolpropane, glycerol, neopentyl glycol, dimethylolpropane, 1,3-dioxane-5,5-dimethanol, sorbitol, mannitol and alpha-methylglucoside.

In another embodiment of the aqueous resin composition according to the invention, in the dendritic polyol (B) the chain extender is selected from the group consisting of a monofunctional carboxylic acid having at least two hydroxyl groups and a monofunctional carboxylic acid having at least two hydroxyl groups wherein one or more of the hydroxyl groups are hydroxyalkyl substituted.

Preferably, in the dendritic polyol (B) the chain extender is selected from the group consisting of dimethylolpropionic acid, alpha, alpha-bis (hydroxymethyl)butyric acid, alpha, alpha, alpha-tris(hydroxymethyl)-acetic acid, alpha, alpha-bis-(hydroxymethyl)valeric acid, alpha, alpha-bis(hydroxy)propionic acid and 3,5-dihydroxybenzoic acid.

A particularly preferred combination is a dendritic polyol as outlined above where the central initiator molecule is trimethylolpropane and the chain extender is dimethylolpropionic acid.

In another embodiment of the aqueous resin composition according to the invention the reaction mixture for obtaining the polyester-polyurethane further comprises
(A4) a polycarbonate polyol which is different from polyester polyol (A1) with a number average molecular weight of ≥ 400 g/mole to ≤ 6000 g/mole.

Component (A4) suitably comprises hydroxyl-containing polycarbonates whose molecular weight Mₙ is ≥ 400 g/mole to ≤ 6000 g/mole (DIN 55672/1), preferably ≥ 600 g/mole to ≤ 3000 g/mole, and which are obtainable, for example, by reacting carbonic acid derivatives, e.g. diphenyl carbonate, dimethyl carbonate or phosgene, with polyols, and in some cases diols. Examples of suitable such diols include ethylene glycol, 1,2- and 1,3-propanediol, 1,3- and 1,4-butanediol, 1,6-hexanediol, 1,8-octanediol, neopentylglycol, 1,4-bishydroxymethylcyclohexane, 2-methyl-1,3-propanediol, 2,2,4-trimethylpentane-1,3-diol, dipropylene glycol, polypropylene glycols, dibutylene glycol, polybutylene glycols, bisphenol A, tetrabromobisphenol A, and also lactone-modified diols. The diol component contains preferably from 40 to 100% by weight of hexanediol, preferably 1,6-hexanediol and/or hexanediol derivatives, preferably those which in addition to terminal OH groups contain ether groups or ester groups, examples being products obtained by reacting 1 mol of hexanediol with at least 1 mol, in some cases 1 to 2 mol, of caprolactone or by etherifying hexanediol with itself to give dihexylene or trihexylene glycol. Additionally the polyether-polycarbonate diols described in DE 37 17 060 A1 can be employed.

The hydroxyl polycarbonates (A4) are preferably linear. They may, however, be slightly branched where appropriate through the incorporation of polyfunctional components, especially low molecular weight polyols. Compounds suitable for this purpose include for example glycerol, trimethylolpropane, hexane-1,2,6-triol, butane-1,2,4-triol, trimethylolethane, pentaerythritol, quinitol, mannitol, and sorbitol, methylglycoside or 1,3,4,6-dianhydrohexitols.

In another embodiment of the aqueous resin composition according to the invention the reaction mixture for obtaining the polyester-polyurethane further comprises
(A5) a low molecular weight compound containing two or more hydroxy and/or amino groups having a molecular weight of from ≥ 60 g/mole to ≤ 400 g/mole.

The low molecular weight polyols (A5) are used in general for the purpose of stiffening and/or branching the polymer chain. The molecular weight is in the range of ≥ 60 g/mole to ≤ 400 g/mole, preferably from ≥ 62 g/mole to ≤ 200 g/mole. They can contain aliphatic, cycloaliphatic or aromatic groups. Suitable polyols (A5) are compounds having up to about 20 carbons per molecule, such as ethylene glycol, diethylene glycol, triethylene glycol, 1,2-propanediol, 1,3-propanediol, 1,4-butanediol, 1,3-butylene glycol, cyclohexanediol, 1,4-cyclohexanedimethanol, 1,6-hexanediol, hydroquinone dihydroxyethyl ether, bisphenol A (2,2-bis(4-hydroxyphenyl)propane), hydrogenated bisphenol A (2,2-bis(4-hydroxycyclohexyl)propane) and also mixtures thereof, and also trimethylolpropane, glycerol or pentaerythritol. Ester diols as well, such as δ-hydroxybutyl-ε-hydroxy-caproic esters, ω-hydroxyhexyl-γ-hydroxybutyric esters, adipic acid β-hydroxyethyl esters or terephthalic acid bis(β-hydroxyethyl) ester, for example, can be used.

Diamines or polyamines and also hydrazides can likewise be used as (A5), examples being ethylenediamine, 1,2- and 1,3-diaminopropane, 1,4-diaminobutane, 1,6-diaminohexane, isophoronediamine, the isomer mixture of 2,2,4- and 2,4,4-trimethylhexamethylenediamine, 2-methylpentamethylene-diamine, diethylenetriamine, 1,3- and 1,4-xylylenediamine, α,α,α',α'-tetramethyl-1,3- and -1,4-xylylenediamine and 4,4-diaminodicyclohexylmethane, dimethylethylenediamine, hydrazine or adipic dihydrazide. Component (A5) preferably contains at least 2% by weight of at least one compound which has a functionality of three or more in respect of reaction with NCO groups.

In another embodiment of the aqueous resin composition according to the invention the reaction mixture for obtaining the polyester-polyurethane further comprises
(A6) a compound which is monofunctional in terms of reaction with NCO groups or which contains active hydrogen atoms differing in reactivity, these units being located in each case at the chain end of a polymer containing urethane groups.

The resin may where appropriate also include units (A6) which are each located at the chain ends, and cap them. These units are derived on the one hand from monofunctional, isocyanate-reactive compounds, such as monoamines, especially mono-secondary amines, or monoalcohols. Mention may be made here by way of example of methylamine, ethylamine, propylamine, butylamine, octylamine, laurylamine, stearylamine, isononyloxypropylamine, dimethylamine, diethylamine, dipropylamine, dibutylamine, N-methylaminopropylamine, diethyl(methyl)aminopropylamine, morpholine, piperidine or the substituted derivatives thereof, amido amines from diprimary amines and monocarboxylic acids, monoketimines of diprimary amines, primary/tertiary amines, such as N,N-dimethylaminopropylamine, for example.

Likewise suitable as component (A6) are compounds containing active hydrogen atoms which differ in reactivity towards isocyanate groups, such as compounds which in addition to a primary amino group also contain secondary amino groups or in addition to an OH group also contain COOH groups or in addition to an amino group (primary or secondary) also contain OH groups. Preference is given to compounds (A6) which in addition to an amino group (primary or secondary) also contain OH groups. Examples of such are primary/secondary amines, such as 3-amino-1-methyl-aminopropane, 3-amino-1-ethylaminopropane, 3-amino-1-cyclohexylaminopropane, 3-amino-1-methylaminobutane; mono-hydroxy-carboxylic acids, such as hydroxyacetic acid, lactic acid or malic acid, and also alkanolamines such as N-aminoethylethanolamine, ethanolamine, 3-amino-propanol, neopentanolamine, and, with particular preference, diethanolamine. In this way it is possible additionally to introduce functional groups into the polymer end product.

In another embodiment of the aqueous resin composition according to the invention the polyisocyanate component (A3) is chosen from the group consisting of isophorone-diisocyanate, hexamethylene-diisocyanate, bis-(4-isocyanatocyclohexyl)-methane, ω,ω'-diisocyanato-1,3-dimethylcyclohexane, triisocyanatononane and 1,3-bis(isocyanatomethyl)benzene.

Another aspect of the present invention is a process for preparing the aqueous resin composition according to claim 1, comprising the steps of:
reacting, in a one-stage process or multi-stage process, a reaction mixture comprising
   (A1) a polyester polyol with a number-average molecular weight Mₙ of ≥ 400 g/mole to ≤ 20 000 g/mole,
   (A2) at least one compound containing at least two isocyanate-reactive groups and at least one group capable of forming anions,
   (A3) a polyisocyanate, and
   (B) a dendritic polyol obtainable from a central initiator molecule or initiator polymer having at least one reactive hydroxyl group (X), which hydroxyl group (X) under formation of an initial tree structure is bonded to a reactive carboxyl group (Y) in a monomeric chain extender having the two reactive groups (X) and (Y), and wherein the chain extender has at least one carboxyl group (Y) and at least two hydroxyl groups (X) or hydroxyalkyl substituted hydroxyl groups (X), and
adding a neutralizing agent.

With respect to individual components mentioned above, in the interest of brevity reference is made to the previous description in connection with the aqueous resin composition.

The urethanization reaction is normally conducted at temperatures from 0 °C to 140 °C, depending on the reactivity of the isocyanate used. In order to accelerate the urethanization reaction it is possible to use suitable catalysts, such as are known for the acceleration of the NCO-OH reaction to the person skilled in the art. Examples are tertiary amines such as triethylamine, for example, organotin compounds such as dibutyltin oxide, dibutyltin dilaurate or tin bis(2-ethylhexanoate), for example, or other organometallic compounds.

The urethanization reaction is preferably conducted in the presence of solvents which are inactive towards isocyanate groups. Particularly suitable for this purpose are those solvents which are compatible with water, such as ethers, ketones and esters, and also N-methylpyrrolidone, for example. The amount of this solvent appropriately does not exceed 30% by weight and is in some cases in the range from 10 to 25% by weight, based in each case on the sum of polyurethane resin and solvent. The polyisocyanate (A3) can be added swiftly to the solution of the other components.

The acid groups incorporated in the resin by component (A2) can at least proportionally be neutralized. Particularly suitable for the neutralization are tertiary amines, examples being trialkylamines having 1 to 12, in some cases 1 to 6, carbon atoms in each alkyl radical. Examples thereof are trimethylamine, triethylamine, methyldiethylamine, tripropylamine and diisopropylethylamine. The alkyl radicals may, for example, also carry hydroxyl groups, as in the case of the dialkylmonoalkanol-, alkyldialkanol- and trialkanolamines. An example of such is dimethylethanolamine, which serves preferably as neutralizing agent. As neutralizing agent it is also possible where appropriate to use inorganic bases, such as ammonia or sodium or potassium hydroxide. The neutralizing agent is used in a molar ratio to the acid groups of the prepolymer of from 0,3:1 to 1,3:1, in some cases from 0,4:1 to 1:1.

The free COOH groups of the resin of the invention can be neutralized before, during or after the urethanization reaction. The neutralizing step is preferably conducted following the urethanization reaction, generally of between room temperature (23 °C) and 80 °C, in some cases between 40 to 80 °C.

In another embodiment the reaction mixture further comprises a triol (C) selected from the group consisting of glycerol, trimethylolethane and trimethylolpropane.

The present invention is furthermore directed towards an aqueous coating system comprising the aqueous resin composition according to the invention and at least one cross-linker compound.

Through combination with cross-linkers it is possible, depending on the reactivity or, where appropriate, blocking of the cross-linkers, to prepare both one-component (1K) and two-component (2K) coating materials. 1K coating materials for the purposes of the present invention are coating materials in which binder component and cross-linker component can be stored together without any cross-linking reaction taking place to a marked extent or to an extent which is detrimental to the subsequent application. The cross-linking reaction takes place only on application, after the cross-linker has been activated. This activation can be effectuated, for example, by raising the temperature. 2K coating materials for the purposes of the present invention are coating materials in which binder component and cross-linker component have to be stored in separate vessels owing to their high reactivity. The two components are not mixed until shortly prior to application, when they react generally without additional activation. In order to accelerate the cross-linking reaction, however, it is also possible to use catalysts or to employ higher temperatures.

Examples of suitable cross-linkers are polyisocyanate cross-linkers, amide- and amine-formaldehyde resins, phenolic resins, aldehyde resins and ketone resins, such as phenol formaldehyde resins, resoles, furan resins, urea resins, carbamic ester resins, triazine resins, melamine resins, benzoguanamine resins, cyanamide resins, aniline resins, as described in "Lackkunstharze", H. Wagner, H.F. Sarx, Carl Hanser Verlag München, 1971. Preferred cross-linkers are polyisocyanates.

Polyisocyanates can be used with free and/or blocked isocyanate groups. Suitable such cross-linker resins include blocked polyisocyanates based for example on isophorone diisocyanate, hexamethylene diisocyanate, 1,4-diisocyanatocyclo-hexane, bis(4-isocyanatocyclohexane)methane or 1,3-diisocyanatobenzene or based on paint polyisocyanates such as polyisocyanates which contain biuret or isocyanurate groups and are derived from 1,6-diisocyanatohexane, isophorone diisocyanate or bis(4-isocyanatocyclohexane)methane or paint polyisocyanates which contain urethane groups and are based on 2,4- and/or 2,6-diisocyanato-toluene or isophorone diisocyanate on the one hand and low molecular weight polyhydroxyl compounds such as trimethylolpropane, the isomeric propanediols or butanediols or any desired mixtures of such polyhydroxyl compounds on the other.

Suitable blocking agents for the stated polyisocyanates are, for example, monohydric alcohols such as methanol, ethanol, butanol, hexanol, cyclohexanol, benzyl alcohol, oximes such as acetoxime, methyl ethyl ketoxime, cyclohexanone oxime, lactams such as ε-caprolactam, phenols, amines such as diisopropylamine or dibutylamine, dimethylpyrazole or triazole, and also dimethyl malonate, diethyl malonate or dibutyl malonate.

Preference is given to the use of low-viscosity, hydrophobic or hydrophilicized polyisocyanates with free isocyanate groups based on aliphatic, cycloaliphatic, araliphatic and/or aromatic isocyanates, more preferably on aliphatic or cycloaliphatic isocyanates, since in this way it is possible to achieve a particularly high level of resistance in the coating film. The advantages of the binder dispersions of the invention are most clearly manifested in combination with these cross-linkers. These polyisocyanates generally have at 23 °C a viscosity of from 10 to 3500 mPas. If necessary the polyisocyanates can be employed as a blend of small amounts of inert solvents, in order to lower the viscosity to a level within the stated range. Triisocyanatononane as well can be used alone or in mixtures as a cross-linker component.

The resin and dispersion described herein are generally of sufficient hydrophilicity, so that the dispersibility of the cross-linker resins, where the substances in question are not water-soluble or water-dispersible in any case, is ensured. Water-soluble or gap dispersible polyisocyanates are obtainable, for example, by modification with carboxylate, sulfonate and/or polyethylene oxide groups and/or polyethylene oxide/polypropylene oxide groups.

Hydrophilicization of polyisocyanates, for example, is possible by reaction with sub stoichiometric amounts of monohydric hydrophilic polyether alcohols. The preparation of hydrophilicized polyisocyanates of this kind is described for example in EP 0 540 985 A1 (p. 3, line 55 - p. 4 line 5). Also highly suitable are the polyisocyanates containing allophanate groups described in EP 0 959 087 A1 (p. 3 lines 39 - 51), which can be prepared by reacting low-monomer-content polyisocyanates with polyethylene oxide polyether alcohols under allophanatization conditions. The water-dispersible polyisocyanate mixtures based on triisocyanatononane, as well, which are described in DE 100 078 21 A1 (p. 2 line 66 - p. 3 line 5) are suitable, as are polyisocyanates hydrophilicized with ionic groups (sulfonate groups, phosphonate groups), as described, for example, in DE 10 024 624 A1 (p. 3 lines 13 - 33). A further possibility is that of hydrophilicization through the addition of commercially customary emulsifiers.

In principle it is of course also possible to use mixtures of different cross-linker resins.

Preferred cross-linker components are hydrophobic or hydrophilicized polyisocyanates containing free isocyanate groups based on aliphatic, cycloaliphatic, araliphatic and/or aromatic isocyanates.

The aqueous coating systems comprising the resins of the invention can, where appropriate, also contain other binders or dispersions, based for example on polyesters, polyurethanes, polyethers, polyepoxides or polyacrylates, and, where appropriate, pigments and other auxiliaries and additives that are known in the coatings industry.

Customary coatings auxiliaries and additives can be added both to the aqueous coating system before, during or after its preparation and to the binder or cross-linker components present in the said system. Examples include defoamers, thickeners, pigments, dispersing auxiliaries, dulling agents, catalysts, anti-skinning agents, anti-settling agents or emulsifiers.

The coating system according to the invention displays an excellent resistance to environmental conditions. Hence, the invention also encompasses the use of this coating system for coating, varnishing and/or sealing a substrate, wherein the substrate is selected from the group consisting of wood, board, metal, stone, concrete, glass, cloth, leather, paper and foam. Preferably, the metal substrate is selected from the group consisting of steel, cold rolled steel, hot rolled steel, stainless steel, aluminium, steel coated with zinc metal, steel coated with zinc alloys and mixtures thereof.

The coating system can be produced by any of the various spraying methods, such as air pressure spraying, airless spraying or electrostatic spraying methods, for example, using one-component or, where appropriate, two-component spraying equipment. The coating systems can, however, also be applied by other processes, for example by brushing, rolling or knife coating.

The present invention will be further described by way of the following examples without wishing to be limited by them.

### Example 1: synthesis of a polyester-polyurethane resin dispersion

A polyester-polyurethane resin dispersion was prepared from the following components:

| Resin 1.1 | Amount [g] | Weight-% |
|---|---|---|
| Polyester polyol | 495,4 | 49,54 |
| Dendritic polyol 1 | 333,3 | 33,33 |
| Dimethylol propionic acid | 40,0 | 4,00 |
| Tin(II)-ethylhexanoate | 1,30 | 0,125 |
| Acetone | 1000 | for 50 weight-% solids |
| | | |
| Isophorone diisocyanate | 131,3 | 13,13 |
| | | |
| N,N-dimethylethanolamine | 29,2 | |
| | | |
| Deionized water | 1153,0 | |

The polyester polyol employed had an acid number of 2,8-2,9 mg KOH/g (DIN 3682), an OH number of 200 mg KOH/g (theory) and 180 mg KOH/g-205 mg KOH/g (experimental) (DIN 53240 part 2). The dispersion had a solids content of 44.2 weight-% (the solids content was determined in drying cabinet and calculated as follows: final weight [g] * 100 / initial weight [g] = weight-% solids).

| Resin 1.2 | Amount [g] | Weight-% |
|---|---|---|
| Polyester polyol | 428,0 | 42,80 |
| Dendritic polyol 1 | 352,0 | 35,20 |
| Dimethylol propionic acid | 60,0 | 6,00 |
| Tin(II)-ethylhexanoate | 1,30 | 0,125 |
| Acetone | 1000 | for 50 weight-% solids |
| | | |
| Isophorone diisocyanate | 160,0 | 16,00 |
| | | |
| N,N-dimethylethanolamine | 43,8 | |
| | | |
| Deionized water | 1138,4 | |

The polyester polyol employed had an acid number of 2,8-2,9 mg KOH/g (DIN 3682), an OH number of 200 mg KOH/g (theory) and 180 mg KOH/g-205 mg KOH/g (experimental) (DIN 53240 part 2). The dispersion had a solids content of 55.35 weight-% (the solids content was determined in drying cabinet and calculated as follows: final weight [g] * 100 / initial weight [g] = weight-% solids).

The dendritic polyol 1 was a dendritic polyol with terminal OH groups formed by polymerization of trimethylolpropane as a central initiator molecule and 2,2-dimethylolpropionic acid as a monomeric chain extender. The OH value was 560-630 mg KOH/g (DIN 53240 part 2) and with a bimodal molecular weight distribution the nominal number average molecular weight (GPC) was 1800 g/mole. It may be sourced as Boltorn® P500 from Perstorp.

A reaction vessel was charged with the polyester polyol, the dendritic polyol 1, dimethylol propionic acid, tin(II)-ethylhexanoate and acetone and it was heated to 55 °C for two hours. Isophorone diisocyanate was added and the reaction temperature (ca. 58 °C) was held until an NCO content of less than 0,05% was reached. N,N-dimethylethanolamine was then added, the mixture was stirred for 15 minutes and the mixture was dispersed in water. Finally, the acetone was removed by vacuum distillation. After cooling the viscosity was set to ca. 1000 mPa s (measured at 23 °C using a Brookfield rotational viscosimeter).

### Example 2: synthesis of a polyester-polyurethane resin dispersion

A polyester-polyurethane resin dispersion was prepared from the following components:

| Resin 2.1 | Amount [g] | Weight-% |
|---|---|---|
| Polyester polyol | 464,4 | 46,44 |
| Dendritic polyol 2 | 375,0 | 37,50 |
| Dimethylol propionic acid | 37,5 | 3,75 |
| Tin(II)-ethylhexanoate | 1,3 | 0,125 |
| Acetone | 1000 | for 50 weight-% solids |
| | | |
| Isophorone diisocyanate | 123,1 | 12,31 |
| | | |
| N,N-dimethylethanolamine | 27,4 | |
| | | |
| Deionized water | 1154,8 | |

The polyester polyol was the same as employed in example 1. The dispersion had a solids content of 42.8 weight-% (the solids content was determined in drying cabinet and calculated as follows: final weight [g] * 100 / initial weight [g] = weight-% solids).

| Resin 2.2 | Amount [g] | Weight-% |
|---|---|---|
| Polyester polyol | 346,0 | 34,60 |
| Dendritic polyol 2 | 400,0 | 40,00 |
| Trimethylol propane | 34,0 | 3,40 |
| Dimethylol propionic acid | 60,0 | 6,00 |
| Tin(II)-ethylhexanoate | 1,3 | 0,125 |
| Acetone | 1000 | for 50 weight-% solids |
| | | |
| Isophorone diisocyanate | 160,1 | 16,00 |
| | | |
| N,N-dimethylethanolamine | 43,8 | |
| | | |
| Deionized water | 1138,4 | |
| | | |

The polyester polyol was the same as employed in example 1. The dispersion had a solids content of 54.8 weight-% (the solids content was determined in drying cabinet and calculated as follows: final weight [g] * 100 / initial weight [g] = weight-% solids).

The dendritic polyol 2 was a dendritic polyol with terminal OH groups formed by polymerization of trimethylolpropane as a central initiator molecule and 2,2-dimethylolpropionic acid as a monomeric chain extender. The OH value was 430-590 mg KOH/g (DIN 53240 part 2) and with a bimodal molecular weight distribution the nominal number average molecular weight (GPC) was 1500 g/mole. It may be sourced as Boltorn® P1000 from Perstorp.

A reaction vessel was charged with the polyester polyol, the dendritic polyol 2, dimethylol propionic acid, trimethylol propane, tin(II)-ethylhexanoate and acetone and it was heated to 55 °C for two hours. Isophorone diisocyanate was added and the reaction temperature (ca. 58 °C) was held until an NCO content of less than 0,05% was reached. N,N-dimethylethanolamine was then added, the mixture was stirred for 15 minutes and the mixture was dispersed in water. Finally, the acetone was removed by vacuum distillation. After cooling the viscosity was set to ca. 1000 mPa s (measured at 23 °C using a Brookfield rotational viscosimeter).

### Example 3: synthesis of a polyester-polyurethane resin

A polyester-polyurethane resin was prepared from the following components:

| Resin 3.1 | Amount [g] | Weight-% |
|---|---|---|
| Polyester polyol | 2229 | 73,3 |
| Dimethylol propionic acid | 180 | 6 |
| Tin(II)-ethylhexanoate | 3,8 | 0,125 |
| Acetone | 1615 | for 65 weight-% solids |
| Isophorone diisocyanate | 591 | 19,7 |

The polyester polyol employed had an acid number of 2,8-2,9 mg KOH/g (DIN 3682), an OH number of 200 mg KOH/g (theory) and 180 mg KOH/g - 205 mg KOH/g (experimental) (DIN 53240 part 2).

A reaction vessel was charged with all components except isophorone diisocyanate and the mixture was heated to 55 °C for two hours. Then isophorone diisocyanate was added (exothermic reaction) and the reaction temperature was kept at ca. 58 °C until an NCO content of < 0,05% was reached. The product was cooled to 35 °C and filled into containers for storage.

| Synthesis of a polyester-polyurethane resin dispersion as state of the art | Amount [g] | Weight-% |
|---|---|---|
| Resin of example 3.1 (65 weight-% solids) | 6000 | 66,67 |
| N,N-dimethylethanolamine | 126 | |
| Deionized water | 5441 | for 43 weight-% solids |

A reaction vessel was charged with the resin of example 1 and acetone and it was heated to 55 °C for two hours. After cooling to 50 °C N,N-dimethylethanolamine was added, the mixture was stirred for one hour at this temperature and the mixture was dispersed in water. Finally the acetone was removed by vacuum distillation. After cooling the viscosity was set to ca. 1000 mPa s (measured at 23 °C with a Brookfield rotational viscometer). The dispersion had a solids content of 47 weight-% (the solids content was determines in a drying cabinet and calculated as follows: final weight [g] * 100 / initial weight [g] = wt.% solids).

### Application testing:

In a pendulum absorption experiment according to Koenig (DIN EN ISO 1522) cross-linked dispersions from example 1.1 and 2.1 were tested and crosslinked with a typical state of the art polyisocyanate. The resulting PU coatings on a glass substrate are compared to a state of the art system also on a glass substrate based on example 3 showed a pendulum absorption after 16 hours at 60 °C of 125 seconds (example 1.1) and 96 seconds (example 2.1).

**Table 1.**

| Property | Example 3 | Example 1.1 |
|---|---|---|
| Pendulum absorption after 16h 30 min at 60° C | 73 s | 125 s |
| | | |

| Property | Example 3 | Example 2.1 |
|---|---|---|
| Pendulum absorption after 16h 30 min at 60° C | 73 s | 96 s |

## Claims

1. An aqueous resin composition comprising a polyester-polyurethane resin obtained by reacting, in a one-stage process or multi-stage process, a reaction mixture comprising
(A1) a polyester polyol with a number-average molecular weight Mₙ of ≥ 400 g/mole to ≤ 20 000 g/mole,
(A2) at least one compound containing at least two isocyanate-reactive groups and at least one group capable of forming anions,
(A3) a polyisocyanate, and
(B) a dendritic polyol obtainable from a central initiator molecule or initiator polymer having at least one reactive hydroxyl group (X), which hydroxyl group (X) under formation of an initial tree structure is bonded to a reactive carboxyl group (Y) in a monomeric chain extender having the two reactive groups (X) and (Y), and wherein the chain extender has at least one carboxyl group (Y) and at least two hydroxyl groups (X) or hydroxyalkyl substituted hydroxyl groups (X).

2. The aqueous resin composition according to claim 1, wherein in the dendritic polyol (B) the tree structure is extended and further branched from the initiator molecule or initiator polymer through an addition of further molecules of a monomeric chain extender by means of bonding with the reactive groups (X) and (Y) thereof and/or is further extended through reaction with a chain stopper.

3. The aqueous resin composition according to claim 1, wherein in the dendritic polyol (B) the central initiator molecule or initiator polymer is selected from the group consisting of an aliphatic diol, a cycloaliphatic diol, an aromatic diol, a triol, a tetrol, a sugar alcohol, anhydroennea-heptitol, dipentaerythritol, an alpha-alkylglucoside, a monofunctional alcohol, and an alkoxylate polymer having a molecular weight of at most 8000 g/mol and being produced by reaction between an alkylene oxide and one or more hydroxyl groups originating from one of the aforementioned compounds.

4. The aqueous resin composition according to claim 3, wherein in the dendritic polyol (B) the central initiator molecule is selected from the group consisting of ditrimethylolpropane, ditrimethylolethane, dipentaerythritol, pentaerythritol, alkoxylated pentaerythritol, trimethylolethane, trimethylolpropane, alkoxylated trimethylolpropane, glycerol, neopentyl glycol, dimethylolpropane, 1,3-dioxane-5,5-dimethanol, sorbitol, mannitol and alpha-methylglucoside.

5. The aqueous resin composition according to claim 1, wherein in the dendritic polyol (B) the chain extender is selected from the group consisting of a monofunctional carboxylic acid having at least two hydroxyl groups and a monofunctional carboxylic acid having at least two hydroxyl groups wherein one or more of the hydroxyl groups are hydroxyalkyl substituted.

6. The aqueous resin composition according to claim 5, wherein in the dendritic polyol (B) the chain extender is selected from the group consisting of dimethylolpropionic acid, alpha, alpha-bis (hydroxymethyl)butyric acid, alpha, alpha, alpha-tris(hydroxymethyl)-acetic acid, alpha, alpha-bis-(hydroxymethyl)valeric acid, alpha, alpha-bis(hydroxy)propionic acid and 3,5-dihydroxybenzoic acid.

7. The aqueous resin composition according to claim 1, wherein the reaction mixture for obtaining the polyester-polyurethane further comprises
(A4) a polycarbonate polyol which is different from polyester polyol (A1) with a number average molecular weight of Mₙ of ≥ 400 g/mole to ≤ 6000 g/mole.

8. The aqueous resin composition according to claim, 1, wherein the reaction mixture for obtaining the polyester-polyurethane further comprises
(A5) a low molecular weight compound containing two or more hydroxy and/or amino groups having a molecular weight of from ≤ 60 g/mole to ≤ 400 g/mole.

9. The aqueous resin composition according to claim 1, wherein the reaction mixture for obtaining the polyester-polyurethane further comprises
(A6) a compound which is monofunctional in terms of reaction with NCO groups or which contains active hydrogen atoms differing in reactivity, these units being located in each case at the chain end of a polymer containing urethane groups.

10. The aqueous resin composition according to claim 1, wherein the polyisocyanate component (A3) is chosen from the group consisting of isophorone-diisocyanate, hexamethylene-diisocyanate, bis-(4-isocyanatocyclohexyl)-m ethane, ω, ω'-diisocyanato-1,3-dimethylcyclohexane, triisocyanatononane and 1,3-bis(isocyanatomethyl)benzene.

11. The aqueous resin composition according to claim 1, wherein the reaction mixture further comprises a triol (C) selected from the group consisting of glycerol, trimethylolethane and trimethylolpropane.

12. A process for preparing the aqueous resin composition according to claim 1, comprising the steps of:
reacting, in a one-stage process or multi-stage process, a reaction mixture comprising
(A1) a polyester polyol with a number-average molecular weight Mₙ of ≥ 400 g/mole to ≤ 20 000 g/mole,
(A2) at least one compound containing at least two isocyanate-reactive groups and at least one group capable of forming anions,
(A3) a polyisocyanate, and
(B) a dendritic polyol obtainable from a central initiator molecule or initiator polymer having at least one reactive hydroxyl group (X), which hydroxyl group (X) under formation of an initial tree structure is bonded to a reactive carboxyl group (Y) in a monomeric chain extender having the two reactive groups (X) and (Y), and wherein the chain extender has at least one carboxyl group (Y) and at least two hydroxyl groups (X) or hydroxyalkyl substituted hydroxyl groups (X), and
adding a neutralizing agent.

13. An aqueous coating system comprising the aqueous resin composition according to claim 1 and at least one cross-linker compound.

14. Use of the aqueous coating system according to claim 13 for coating, varnishing and/or sealing a substrate, wherein the substrate is selected from the group consisting of wood, board, metal, stone, concrete, glass, cloth, leather, paper and foam.

15. Use according to claim 13, wherein the metal substrate is selected from the group consisting of steel, cold rolled steel, hot rolled steel, stainless steel, aluminium, steel coated with zinc metal, steel coated with zinc alloys and mixtures thereof.

## Patentansprüche

1. Wässrige Harzzusammensetzung, umfassend ein Polyester-Polyurethanharz, erhalten durch Umsetzen in einem einstufigen Verfahren oder mehrstufigen Verfahren eines Reaktionsgemischs umfassend
(A1) ein Polyesterpolyol mit einem anzahlgemittelten Molekulargewicht Mₙ von ≥ 400 g/mol bis ≤ 20.000 g/mol,
(A2) wenigstens eine Verbindung, die wenigstens zwei Isocyanat-reaktive Gruppen und wenigstens eine Gruppe, die zum Bilden von Anionen fähig ist, enthält,
(A3) ein Polyisocyanat und
(B) ein dendritisches Polyol, erhältlich aus einem zentralen Initiatormolekül oder Initiatorpolymer, das wenigstens eine reaktionsfähige Hydroxygruppe (X) aufweist, welche Hydroxygruppe (X) unter Entstehung einer Anfangs-Baumstruktur an eine reaktionsfähige Carboxygruppe (Y) eines monomeren Kettenverlängerungsmittels, das die beiden reaktionsfähigen Gruppen (X) und (Y) aufweist, gebunden wird, und wobei das Kettenverlängerungsmittel wenigstens eine Carboxygruppe (Y) und wenigstens zwei Hydroxygruppen (X) oder Hydroxyalkylsubstituierte Hydroxygruppen (X) aufweist.

2. Wässrige Harzzusammensetzung gemäß Anspruch 1, wobei in dem dendritischen Polyol (B) die Baumstruktur von dem Initiatormolekül oder Initiatorpolymer durch Zugabe weiterer Moleküle eines monomeren Kettenverlängerungsmittels durch Binden mit den reaktionsfähigen Gruppen (X) und (Y) davon verlängert und weiter verzweigt wird und/oder durch Umsetzen mit einem Kettenstopper weiter verlängert wird.

3. Wässrige Harzzusammensetzung gemäß Anspruch 1, wobei in dem dendritischen Polyol (B) das zentrale Initiatormolekül oder Initiatorpolymer ausgewählt ist aus der Gruppe bestehend aus einem aliphatischen Diol, einem cycloaliphatischen Diol, einem aromatischen Diol, einem Triol, einem Tetrol, einem Zuckeralkohol, Anhydroennea-Heptitol, Dipentaerythritol, einem alpha-Alkylglucosid, einem monofunktionellen Alkohol und einem Alkoxylat-Polymer mit einem Molekulargewicht von höchstens 8000 g/mol, und hergestellt ist durch Umsetzung zwischen einem Alkylenoxid und einer oder mehreren Hydroxygruppen, die einer der vorstehend genannten Verbindungen entstammen.

4. Wässrige Harzzusammensetzung gemäß Anspruch 3, wobei in dem dendritischen Polyol (B) das zentrale Initiatormolekül ausgewählt ist aus der Gruppe bestehend aus Ditrimethylolpropan, Ditrimethylolethan, Dipentaerythritol, Pentaerythritol, alkoxyliertem Pentaerythritol, Trimethylolethan, Trimethylolpropan, alkoxyliertem Trimethylolpropan, Glycerol, Neopentylglycol, Dimethylolpropan, 1,3-Dioxan-5,5-dimethanol, Sorbitol, Mannitol und alpha-Methylglucosid.

5. Wässrige Harzzusammensetzung gemäß Anspruch 1, wobei in dem dendritischen Polyol (B) das Kettenverlängerungsmittel ausgewählt ist aus der Gruppe bestehend aus einer monofunktionellen Carbonsäure mit wenigstens zwei Hydroxygruppen und einer monofunktionellen Carbonsäure mit wenigstens zwei Hydroxygruppen, wobei eine oder mehrere der Hydroxygruppen Hydroxyalkyl-substituiert sind.

6. Wässrige Harzzusammensetzung gemäß Anspruch 5, wobei in dem dendritischen Polyol (B) das Kettenverlängerungsmittel ausgewählt ist aus der Gruppe bestehend aus Dimethylolpropionsäure, alpha, alpha-Bis(hydroxymethyl)buttersäure, alpha, alpha, alpha-Tris(hydroxymethyl)essigsäure, alpha, alpha-Bis(hydroxymethyl)valeriansäure, alpha, alpha-Bis(hydroxy)propionsäure und 3,5-Dihydroxybenzoesäure.

7. Wässrige Harzzusammensetzung gemäß Anspruch 1, wobei das Reaktionsgemisch zum Erhalten des Polyesterpolyurethans ferner umfasst:
(A4) ein Polycarbonatpolyol, das von dem Polyesterpolyol (A1) verschieden ist, mit einem anzahlgemittelten Molekulargewicht Mₙ von ≥ 400 g/mol bis ≤ 6000 g/mol.

8. Wässrige Harzzusammensetzung gemäß Anspruch 1, wobei das Reaktionsgemisch zum Erhalten des Polyesterpolyurethans ferner umfasst:
(A5) eine Verbindung mit niedrigem Molekulargewicht, die zwei oder mehr Hydroxy-und/oder Aminogruppen enthält, mit einem Molekulargewicht von ≥ 60 g/mol bis ≤ 400 g/mol.

9. Wässrige Harzzusammensetzung gemäß Anspruch 1, wobei das Reaktionsgemisch zum Erhalten des Polyesterpolyurethans ferner umfasst:
(A6) eine Verbindung, die hinsichtlich der Reaktion mit NCO-Gruppen monofunktionell ist, oder die aktive Wasserstoffatome enthält, die sich in der Reaktionsfähigkeit unterscheiden, wobei diese Einheiten in jedem Fall an dem Kettenende eines Polymers, das Urethangruppen enthält, angeordnet sind.

10. Wässrige Harzzusammensetzung gemäß Anspruch 1, wobei die Polyisocyanatkomponente (A3) ausgewählt ist aus der Gruppe bestehend aus Isophorondiisocyanat, Hexamethylendiisocyanat, Bis(4-isocyanatocyclohexyl)methan, ω,ω'-Diisocyanato-1,3-dimethylcyclohexan, Triisocyanatononan und 1,3-Bis(isocyanatomethyl)benzol.

11. Wässrige Harzzusammensetzung gemäß Anspruch 1, wobei das Reaktionsgemisch ferner ein Triol (C) ausgewählt aus der Gruppe bestehend aus Glycerol, Trimethylolethan und Trimethylolpropan umfasst.

12. Verfahren zum Herstellen der wässrigen Harzzusammensetzung gemäß Anspruch 1, umfassend die Schritte:
in einem einstufigen Verfahren oder mehrstufigen Verfahren Umsetzen eines Reaktionsgemischs umfassend
(A1) ein Polyesterpolyol mit einem anzahlgemittelten Molekulargewicht Mₙ von ≥ 400 g/mol bis ≤ 20.000 g/mol,
(A2) wenigstens eine Verbindung, die wenigstens zwei Isocyanat-reaktive Gruppen und wenigstens eine Gruppe, die zum Bilden von Anionen fähig ist, enthält,
(A3) ein Polyisocyanat und
(B) ein dendritisches Polyol, erhältlich aus einem zentralen Initiatormolekül oder Initiatorpolymer, das wenigstens eine reaktionsfähige Hydroxygruppe (X) aufweist, welche Hydroxygruppe (X) unter Entstehung einer Anfangs-Baumstruktur an eine reaktionsfähige Carboxygruppe (Y) eines monomeren Kettenverlängerungsmittels, das die beiden reaktionsfähigen Gruppen (X) und (Y) aufweist, gebunden wird, und wobei das Kettenverlängerungsmittel wenigstens eine Carboxygruppe (Y) und wenigstens zwei Hydroxygruppen (X) oder Hydroxyalkylsubstituierte Hydroxygruppen (X) aufweist, und
Zugeben eines Neutralisationsmittels.

13. Wässriges Beschichtungssystem, umfassend die wässrige Harzzusammensetzung gemäß Anspruch 1 und wenigstens eine Vernetzerverbindung.

14. Verwendung des wässrigen Beschichtungssystems gemäß Anspruch 13 zum Beschichten, Lackieren und/oder Versiegeln eines Substrats, wobei das Substrat ausgewählt ist aus der Gruppe bestehend aus Holz, Pappe, Metall, Stein, Beton, Glas, Tuch, Leder, Papier und Schaumstoff.

15. Verwendung gemäß Anspruch 13, wobei das Metallsubstrat ausgewählt ist aus der Gruppe bestehend aus Stahl, kaltgewalztem Stahl, warmgewalztem Stahl, rostfreiem Stahl, Aluminium, mit Zinkmetall beschichtetem Stahl, mit Zinklegierungen beschichtetem stahl und Gemischen davon.

## Revendications

1. Composition de résine aqueuse comprenant une résine polyester-polyuréthane obtenue par réaction, dans un processus à une étape ou un processus à étapes multiples, d'un mélange de réaction comprenant
(A1) un polyester-polyol ayant un poids moléculaire moyen en nombre Mₙ de ≥ 400 g/mole à ≤ 20 000 g/mole,
(A2) au moins un composé contenant au moins deux groupes réactifs avec l'isocyanate et au moins un groupe capable de former des anions,
(A3) un polyisocyanate, et
(B) un polyol dendritique pouvant être obtenu à partir d'une molécule d'initiateur ou un polymère initiateur central comportant au moins un groupe hydroxyle réactif (X), ledit groupe hydroxyle (X), lors de la formation d'une structure d'arbre initiale, étant lié à un groupe carboxyle réactif (Y) dans un extenseur de chaîne monomère comportant les deux groupes réactifs (X) et (Y), et l'extenseur de chaîne comportant au moins un groupe carboxyle (Y) et au moins deux groupes hydroxyle (X) ou groupes hydroxyle (X) substitués par hydroxyalkyle.

2. Composition de résine aqueuse selon la revendication 1, dans laquelle, dans le polyol dendritique (B), la structure d'arbre est étendue et ramifiée plus avant à partir de la molécule d'initiateur ou du polymère initiateur par l'intermédiaire d'une addition de molécules supplémentaires d'un extenseur de chaîne monomère au moyen d'une liaison avec les groupes réactifs (X) et (Y) de celui-ci et/ou est étendu plus avant par réaction avec un terminateur de chaîne.

3. Composition de résine aqueuse selon la revendication 1, dans laquelle, dans le polyol dendritique (B), la molécule d'initiateur ou le polymère d'initiateur central est choisi dans le groupe constitué d'un diol aliphatique, un diol cycloaliphatique, un diol aromatique, un triol, un tétrol, un alcool de sucre, l'anhydroennéa-heptitol, le dipentaérythritol, un alpha-alkylglucoside, un alcool monofonctionnel, et un polymère d'alcoxylate ayant un poids moléculaire d'au plus 8000 g/mol et étant produit par réaction entre un oxyde d'alkylène et un ou plusieurs groupes hydroxyle provenant d'un des composés mentionnés ci-dessus.

4. Composition de résine aqueuse selon la revendication 3, dans laquelle, dans le polyol dendritique (B) la molécule d'initiateur centrale est choisie dans le groupe constitué des ditriméthylolpropane, ditriméthyloléthane, dipentaérythritol, pentaérythritol, pentaérythritol alcoxylé, triméthyloléthane, triméthylolpropane, triméthylolpropane alcoxylé, glycérol, néopentylglycol, diméthylolpropane, 1,3-dioxane-5,5-diméthanol, sorbitol, mannitol et alpha-méthylglucoside.

5. Composition de résine aqueuse selon la revendication 1, dans laquelle, dans le polyol dendritique (B), l'extenseur de chaîne est choisi dans le groupe constitué d'un acide carboxylique monofonctionnel ayant au moins deux groupes hydroxyle et un acide carboxylique monofonctionnel ayant au moins deux groupes hydroxyle, un ou plusieurs des groupes hydroxyle étant substitués par hydroxyalkyle.

6. Composition de résine aqueuse selon la revendication 5, dans laquelle, dans le polyol dendritique (B), l'extenseur de chaîne est choisi dans le groupe constitué des acide diméthylolpropionique, acide alpha, alpha-bis(hydroxyméthyl)butyrique, acide alpha, alpha, alpha-tris(hydroxyméthyl)-acétique, acide alpha, alpha-bis-(hydroxyméthyl)valérique, acide alpha, alpha-bis(hydroxy)propionique et acide 3,5-dihydroxybenzoïque.

7. Composition de résine aqueuse selon la revendication 1, dans laquelle le mélange de réaction pour obtenir le polyester-polyuréthane comprend en outre
(A4) un polycarbonate polyol qui est différent du polyester polyol (A1) ayant un poids moléculaire moyen en nombre de Mₙ de ≥ 400 g/mole à ≤ 6000 g/mole.

8. Composition de résine aqueuse selon la revendication 1, le mélange de réaction pour obtenir le polyester-polyuréthane comprenant en outre
(A5) un composé de faible poids moléculaire contenant deux ou plus de deux groupes hydroxy et/ou amino ayant un poids moléculaire de ≥ 60 g/mole à ≤ 400 g/mole.

9. Composition de résine aqueuse selon la revendication 1, dans laquelle le mélange de réaction pour obtenir le polyester-polyuréthane comprend en outre
(A6) un composé qui est monofonctionnel en termes de réaction avec des groupes NCO ou qui contient des atomes d'hydrogène actifs différant en termes de réactivité, ces motifs étant situés dans chaque cas à l'extrémité de chaîne d'un polymère contenant des groupes uréthane.

10. Composition de résine aqueuse selon la revendication 1, dans laquelle le composant de polyisocyanate (A3) est choisi dans le groupe constitué des diisocyanate d'isophorone, diisocyanate d'hexaméthylène, bis-(4-isocyanatocyclohexyl)-méthane, ω,ω'-diisocyanato-1,3-diméthylcyclohexane, triisocyanatononane et 1,3-bis(isocyanatométhyl)benzène.

11. Composition de résine aqueuse selon la revendication 1, dans laquelle le mélange de réaction comprend en outre un triol (C) choisi dans le groupe constitué des glycérol, triméthyloléthane et triméthylolpropane.

12. Procédé de préparation de la composition de résine aqueuse selon la revendication 1, comprenant les étapes de :
réaction, dans un processus à une étape ou un processus à étapes multiples, d'un mélange de réaction comprenant
(A1) un polyester-polyol ayant un poids moléculaire moyen en nombre Mₙ de ≥ 400 g/mole à ≤ 20 000 g/mole,
(A2) au moins un composé contenant au moins deux groupes réactifs avec l'isocyanate et au moins un groupe capable de former des anions,
(A3) un polyisocyanate, et
(B) un polyol dendritique pouvant être obtenu à partir d'une molécule d'initiateur ou un polymère initiateur central comportant au moins un groupe hydroxyle réactif (X), ledit groupe hydroxyle (X), lors de la formation d'une structure d'arbre initiale, étant lié à un groupe carboxyle réactif (Y) dans un extenseur de chaîne monomère comportant les deux groupes réactifs (X) et (Y), et l'extenseur de chaîne comportant au moins un groupe carboxyle (Y) et au moins deux groupes hydroxyle (X) ou groupes hydroxyle (X) substitués par hydroxyalkyle, et
ajout d'un agent neutralisant.

13. Système de revêtement aqueux comprenant la composition de résine aqueuse selon la revendication 1 et au moins un composé de réticulation.

14. Utilisation du système de revêtement aqueux selon la revendication 13 pour revêtir, vernir et/ou étanchéifier un substrat, le substrat étant choisi dans le groupe constitué de bois, carton, métal, pierre, béton, verre, tissu, cuir, papier et mousse.

15. Utilisation selon la revendication 13, dans laquelle le substrat métallique est choisi dans le groupe constitué d'acier, d'acier laminé à froid, d'acier laminé à chaud, d'acier inoxydable, d'aluminium, d'acier revêtu de zinc métallique, d'acier revêtu avec des alliages de zinc et des mélanges de ceux-ci.
